# EUROPEAN PATENT APPLICATION

(11) **EP 1 139 199 A2**
(43) Date of publication of application: **04.10.2001**
(21) Application number: 01300853.7
(22) Date of filing: 31.01.2001
(51) Int. Cl.: G06F 1/00

(54) **Detection of unauthorized data modification on a network**

(30) Priority: 30.03.2000 JP 2000094313
(71) Applicant: Hitachi, Ltd., Chiyoda-ku, Tokyo (JP)
(72) Inventor: Shinoda, Takashi, c/o Hitachi, Ltd., Chiyoda-ku, Tokyo 100 (JP); Toyoshima, Hisashi, Hitachi, Ltd., Chiyoda-ku, Tokyo 100 (JP)
(74) Representative: Calderbank, Thomas Roger

(57) **Abstract**

The present invention relates generally to security measures for protecting information on a network and more particularly to detecting falsifications made in the contents of websites on the Internet. In an embodiment of the present invention a method of detecting the falsification of contents of a plurality of files is provided. The method includes producing first falsification-detecting information corresponding to current filenames or current contents of the plurality of files; and detecting the falsification of the contents of the plurality of files by comparing second falsification-detecting information corresponding to the filenames or contents of the plurality of files at the time of registration or renewal with the first falsification-detecting information.

## Description

This application is related to and claims priority from Japanese Patent Application No. 2000-094313, filed on March 30, 2000.

The present invention relates generally to security measures for protecting information on a network and more particularly to detecting falsifications made in the contents of websites on the Internet.

Many people, government and municipal offices, companies, and so on have opened their websites through WWW (World Wide Web) servers and are sending out various information. The contents opened to the public on the websites vary from simple notices to official announcements. Anybody can obtain such information by accessing the Internet.

The contents of websites of government and municipal offices and companies are regarded as information officially sent out by them to the outside. If outsiders intrude into their websites to falsify the contents of them, their reputation may seriously be damaged. Accordingly, even if they open simple websites for public relations, it is necessary to take enough measures for security. Cases have recently been occurring successively were outsiders intrude into websites and falsify their contents.

One conventional technique to protect the contents of a Web page is to apply a digital watermark to a visual image located on a Web page. The digital watermark includes a digital signature and is typically invisible. An example is given in U.S. Patent 5,905,800, "Method and System for Digital Watermarking," by Moskowitz, issued May 18, 1999. Another example is a commercial product, ImageBridgeTM by Digimac Corp. of Tualatin, OR.

Another technique for protecting a Web page is disclosed in the Japanese Unexamined Patent Application No. 2000-78125, which shows a method for producing certifiable electronic data. With this method, the genuineness of the electronic data can be certified and expressed visually to the users of such electronic data. The outline of the technique is as follows. Information for certifying an electronic mark B such as a Web page or a trademark with a digital signature attached to it is embedded, as an invisible electronic watermark, in an electronic mark A. Then, the electronic mark A is embedded, as a visible watermark, in the electronic mark B.

While the above techniques protect a Web page, marking each Web page with an associated visible watermark, including a digital signature, on a user's site is computationally expensive. This problem is greatly increased because there are many Web sites on a Web server and hence the Web server must check each page. In addition even if each Web page is marked, traditionally it has been hard to detect if outsiders remove the security information and to pinpoint where a falsification occurs.

Thus there is a need for a more efficient and effective technique to protect the contents of a Website. In addition there is a need for a better technique to locate where a falsification may have occurred.

The present invention provides a method and system to detect if contents data units, for example, files, on a server have been falsified. In an exemplary embodiment validation information is provided for a web site having a plurality of web pages. First hash information is determined for the filenames and second hash information is determined for the contents of files. The hash information is embedded in a visible image which is part of the home page. Detection of falsification of the filenames may be determined using the first hash information and/or detection of falsification of the contents of the files may be determined using the second hash information.

Another embodiment provides a system for checking the validity of a plurality of related files stored by a server. The system includes a falsification producing module for producing a first cumulative hash value at a first time having a plurality of first hash values, where a first hash value of the plurality of first hash values is associated with a related file of said plurality of related files; and a falsification detection module for comparing the first cumulative hash value with a second cumulative hash value produced at a second time, the second cumulative hash value having a plurality of second hash values, where a second hash value of the plurality of second hash values is associated with the related file of the plurality of related files.

According to one embodiment of the present invention, falsification-detecting information corresponding to the construction, for example, filenames, or contents of a plurality of contents data units, for example, contents of a plurality of files, is produced at the time of their registration or renewal. Then, when a prescribed condition is met―for example, when a prescribed time comes―the falsification-detecting information at the time of registration or renewal is referred to and the falsification-detecting information corresponding to the current construction (e.g., filename) or contents of the contents data units (e.g., contents of the files) is produced. Then, the former falsification-detecting information and the latter one are compared to detect the falsification, if any, of the contents data units (e.g., files), and a notice of the falsification of the contents data units (e.g., files) is given.

For example, when a plurality of files for a Website is registered or renewed, the hash value of the filenames and contents of the files is calculated and embedded in an IM (Internet Mark), which is attached to the top page, e.g., home page, of the Website. An "Internet Mark," as used herein, is visual or audio data in which security information, for example, a hash value or digital signature may be embedded. The visual data may be an image, a picture, or moving picture. File formats such as JPEG, TIFF, BMP, GIF, PS and MPEG are included. Audio includes WAV files. One way a digital watermark is formed is by embedding a digital signature in an IM. Alternative ways may include other cryptographic information, such as ciphers.

Next, when a prescribed condition is met―for example, when a prescribed time comes―the above hash value in the IM is referred to by using a resident program or the like, and the hash value of the current construction (for example, filenames) and contents of the contents data units (for example, contents of the files associated with the filenames) is calculated. Then, the hash value at the time of registration or renewal and the current one are compared. If the current hash value is different from the hash value at the time of registration or renewal, a notice is given to the system administrator and the design of the IM on the top page is changed to inform users of the falsification of the contents data units.

A further embodiment provides a method for determining a location of falsification of contents of a document sent from a server to a client over a communications path. The communications path includes a first path from the server to an intermediate computer and a second path from the intermediate computer to the client. The contents includes an Internet Mark with embedded cryptographic information. The method includes, the document being sent by the server to the intermediate computer over said first path, if said server validates the contents using the embedded cryptographic information; Next the location is determined to include the first path, if said intermediate computer detects said contents has been falsified. The intermediate computer then sends the document to said client over said second path, when said intermediate computer validates said contents using said embedded cryptographic information; and the location is determined to include the second path, if said client detects said contents has been falsified.

As described above, according to an embodiment of the present invention, if some part of the contents of a Website is changed, a notice can be given immediately without the system administrator's always checking the contents. Thus, any falsification can be detected early. At the same time, users can be informed of the falsification immediately.

As described above, with the detector of falsification in contents in accordance with an embodiment of the present invention, the falsification of the construction or contents of a plurality of contents data units can be detected. Thus, any falsification in contents can be detected early.

These and other embodiments of the present invention are described in more detail in conjunction with the text below and attached figures.

### IN THE DRAWINGS:

Fig. 1 shows a configuration of a falsification detecting system at a server of one embodiment of the present invention.

Fig. 2 is a flowchart showing the production of an IM with embedded falsification information of one embodiment of the present invention.

Fig. 3 shows the outline of the process of producing a hash value corresponding to the filenames including the path names of one embodiment.

Fig. 4 is a flowchart of the process of producing a hash value corresponding to the filenames including the path names of one embodiment .

Fig. 5 shows the outline of the process of producing a hash value corresponding to the contents of contents data units of one embodiment.

Fig. 6 is a flowchart of the process of producing a hash value corresponding to the contents of the contents data units of one embodiment .

Fig. 7 is a flowchart of the falsification-detection process of one embodiment of the present invention.

Fig. 8 shows the outline of a -falsification detection system of a second embodiment of the present invention.

Fig. 9 shows the outline of configuration of the server 800 of a second embodiment.

Fig. 10 shows the outline of configuration of the exit gate device 810 of a second embodiment.

Fig. 11 shows the outline of configuration of the client device 820 of a second embodiment.

Fig. 12 is a flowchart of the registration and renewal process of the contents data units of a second embodiment.

Fig. 13 shows an example of production information 909 of a second embodiment.

Fig. 14 is a flowchart of the processing at the client device of a second embodiment.

Fig. 15 is a flowchart of the processing at the exit gate of a second embodiment.

Fig. 16 is a flowchart of the processing of the falsification-notice receiving/processing unit 913 of a second embodiment.

An embodiment of contents-falsification detector of the present invention, which detects the falsification of a plurality of contents data units, will be described below.

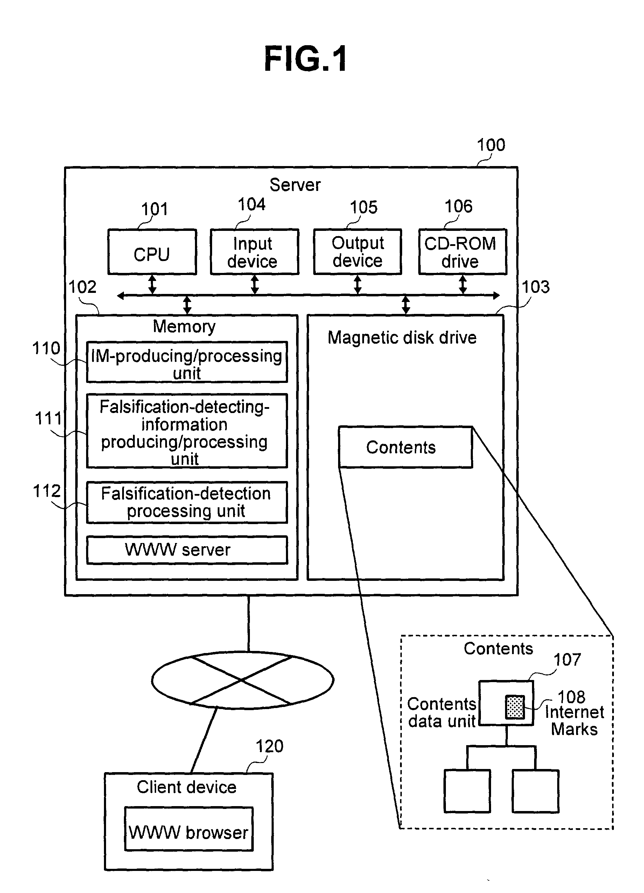

Fig. 1 shows the outline of the configuration of the contents-falsification detector. As shown in the figure, a server 100 comprises a CPU 101, a memory 102, a magnetic disk drive 103, an input device 104, an output device 105, a CD-ROM drive 106, contents data units 107, and IMs (Internet Marks) 108.

The CPU 101 controls the workings of the whole server 100. The memory 102 is loaded with various processing programs and data for controlling the workings of the whole server 100 when the whole server 100 is to be controlled. The magnetic disk drive 103 is a memory device to store the processing programs and the data.

Various data are inputted through the input device 104 to detect the falsification of a plurality of contents data units. Various data regarding the detection of falsification of the contents data units are outputted through the output device 105. The CD-ROM drive 106 reads out the contents of CD-ROMs wherein the various processing programs are stored.

The contents data units 107 include ,for example, the files to be accessed by the user in accordance with the demands of a client device 120. A file may be, for example, a HyperLink Text Mark-up Language (HTML) document representing a Web page. The IMs 108 are image data wherein falsification-detection information, corresponding to the plurality of contents data units 107, is embedded.

The server 100 has an'IM-producing/processing unit 110, a falsification-detecting-information producing/processing unit 111, and a falsification-detection processing unit 112.

The IM-producing/processing unit 110 produces IMs wherein falsification-detecting information corresponding to the construction (for example, filenames) or the contents of the plurality of contents data units (for example, files) 107 at the time of their registration or renewal is embedded. The falsification-detecting-information producing/processing unit 111 produces falsification-detecting information corresponding to the construction or contents of the plurality of contents data units 107.

The falsification-detection processing unit 112 compares falsification-detecting information corresponding to the construction or contents of the plurality of contents data units 107 at the time of their registration or renewal and falsification-detecting information corresponding to the current construction or contents of the contents data units 107 to detect the falsification, if any, of the contents data units 107.

The program to make the server 100 function as the IM-producing/processing unit 110, the falsification-detecting-information producing/processing unit 111, and the falsification-detection processing unit 112 is recorded in a recording medium such the CD-ROM and stored in a magnetic disk or the like. Then, the program is loaded into the memory and run. The program may be recorded into recording media other than the CD-ROM.

The server 100 to control and exhibit the contents data units 107 and the client device 120 to read the contents data units 107 are interconnected through a network such as the Internet.

The server 100 includes a WWW server, which sends out the contents data units 107, for example an HTML document(s), in accordance with the demand of the client device 120. The client device 120 is fitted with a WWW browser, for example Netscape or Internet Explorer, which receives the contents data units 107 from the server 100 and displays them.

The magnetic disk drive 103, which is connected to the server 100, stores the plurality of contents data units 107. An IM (Internet Mark) 108, wherein falsification-detecting information corresponding to the contents data units 107 is embedded, is attached to one of the contents data units 107, e.g. the top page of the contents (for example, a home page).

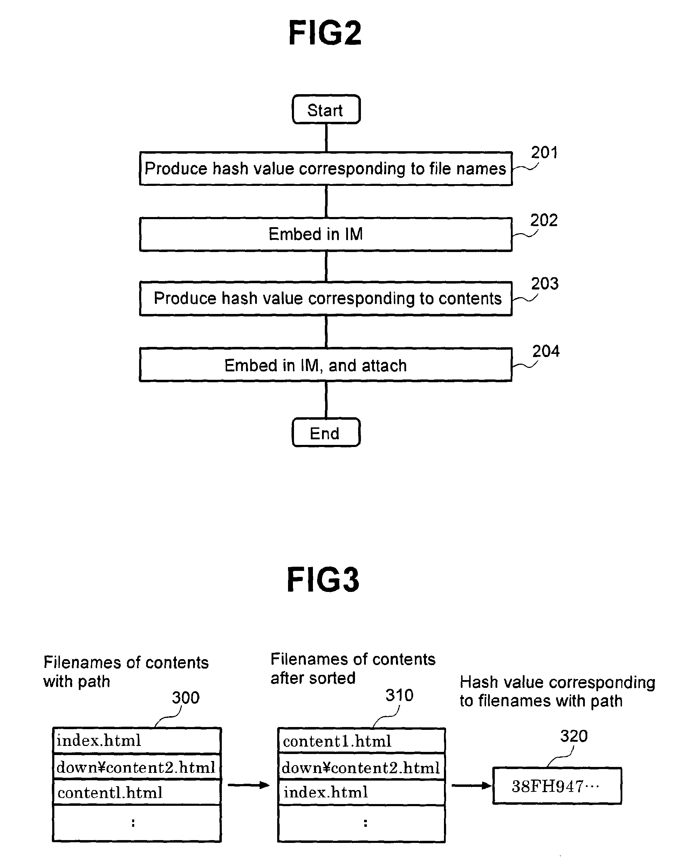

Fig. 2 is a flowchart of the processing of the IM-producing/processing unit 110. As shown in the figure, the IM-producing/processing unit 110 of the server 100 produces an IM wherein falsification-detecting information corresponding to the construction and contents of the plurality of contents data units 107 at the time of their registration or renewal is embedded.

At the step 201, the IM-producing/processing unit 110 has the falsification-detecting-information producing/processing unit 111 produce a hash value corresponding to the filenames, which include the path names (directory names), of each of the plurality of contents data units 107 as falsification-detecting information corresponding to the construction of the plurality of contents data units 107. At the step 202, the falsification-detecting information produced at the step 201 is embedded in the IM 108. In alternative embodiment the filenames do not include the path names.

At the step 203, the IM-producing/processing unit 110 has the falsification-detecting-information producing/processing unit 111 produce a hash value corresponding to the contents of each of the contents data units 107 as falsification-detecting information corresponding to the contents of the plurality of contents data units 107. At the step 204, the falsification-detecting information produced at the step 203 is embedded in the IM 108, and the IM 108 is attached to the top page as described above.

Fig. 3 shows the outline of the process of producing a hash value corresponding to the filenames, including the path names, of a contents data unit 107. As shown in the figure, at the step 201, the filenames 300 with the path names of a contents data unit 107, of which the falsification-detecting information is to be produced, are obtained. The obtained filenames 300 are sorted into alphabetical or other order. Then, the data of the filenames 300 are connected and the hash value 320 is calculated.

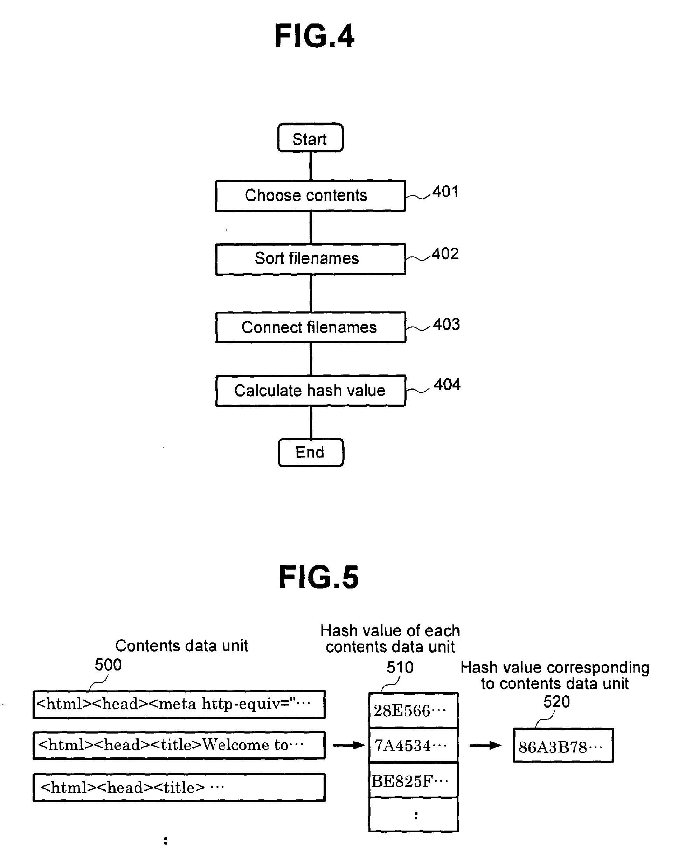

Fig. 4 is a flowchart of the process of producing a hash value corresponding to the filenames, including the path names, of the contents data units 107. As shown in the figure, the falsification-detecting-information producing/processing unit 111 of the server 100 produces falsification-detecting information corresponding the filenames, including the path names, of the plurality of contents data units 107.

At the step 401, the falsification-detecting-information producing/processing unit 111 chooses the contents of which the falsification-detecting information is to be produced and obtains the filenames 300 with the path names of the contents data units 107 of the contents. For example, the files under the top page of a Website supported by the server 100, which are described in a description language to describe Website pages such as HTML (Hyper Text Markup Language) or XML (eXtensible Markup Language), and their related image files or the files of such pages as stored in the server 100 of the pages linked to the top page and their related image files are chosen. Production information to define the files of which the falsification-detecting information is to be produced may be prepared separately, and falsification-detecting information may be produced with respect to only specific files in the server 100 in accordance with the production information.

At the step 402, the filenames 300 obtained at the step 401 are sorted into alphabetical or other order. At the step 403, the filenames 300 are connected. At the step 404, a hash value 320 for the connected filenames 300 is calculated.

Fig. 5 shows the outline of the process of producing a hash value corresponding to the contents of contents data units (for example, the contents of the files). As shown in the figure, at the step 203, the corresponding actual contents data unit 500 is obtained with respect to each of the filenames 310 obtained as described above. Then; a hash value 510 for each contents data unit is calculated. The hash values 510 are connected, for example, concatenated, and a hash value 520 for the connected hash values 510 is calculated.

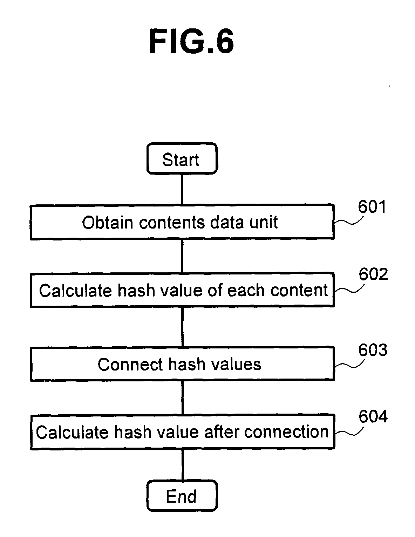

Fig. 6 is a flowchart of the process of producing the hash value corresponding to the contents of the contents data units. As shown in the figure, the falsification-detecting-information producing/processing unit 111 of the server 100 produces the falsification-detecting information corresponding to the contents of a plurality of contents data units.

At the step 601, the falsification-detecting-information producing/processing unit 111 obtains the corresponding actual contents data unit 500 with respect to each of the filenames 310 obtained as described above. At the step 602, the hash value 510 for each contents data unit 500 is calculated.

At the step 603, the hash values 510 for the contents data units 500 are connected, for example, concatenated. At the step 604, a hash value 520 for the connected hash values 510 is calculated.

As described above, the hash value 320 for the filenames 300 and the hash values 520 for the contents data units 500 both to be embedded in the IM 108 are used as correct values at the time of detecting the falsification, if any, of the contents. Therefore, each time the contents or the file construction of the contents data units 500 is changed, the relevant hash value has to be calculated as described above and buried in the IM 108. However, by providing a generator which produces an IM 108 automatically and attach the IM 108 to the contents data unit 500 automatically each time the contents data units are changed, the user can be freed from manual operation.

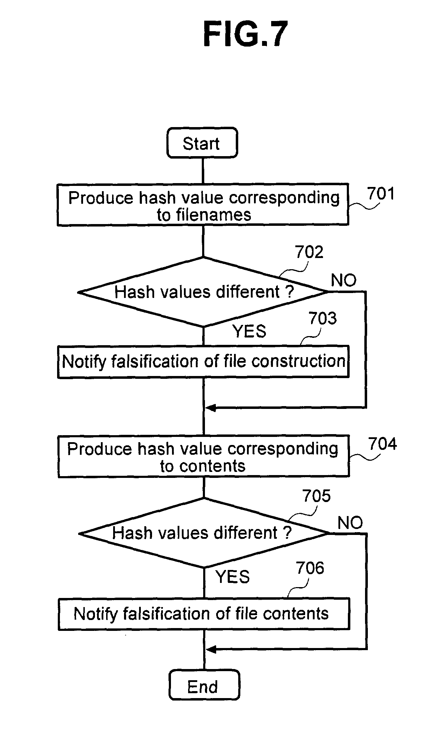

Fig. 7 is a flowchart of the processing of the falsification-detection processing unit 112. As shown in the figure, the falsification-detection processing unit 112 of the server 100 compares the falsification-detecting information corresponding to the construction or the contents of a plurality of contents data units at the time of their registration or renewal and the falsification-detecting information corresponding to their current construction or contents to detect falsification, if any.

At the step 701, the falsification-detection processing unit 112 has the falsification-detecting-information producing/processing unit 111 calculate, in the same way as shown in Fig. 4, the hash value corresponding to the filenames including the path names for each of the contents data units.

At the step 702, the hash value 320 embedded in the IM 108 and the hash value calculated as described above are compared. If the former value 320 is different from the latter value, the processing shifts to the step 703.

The difference, if any, between the hash value embedded in the IM 108 and the hash value calculated as described above both corresponding to the filenames including the path names means that the file construction of the contents data units was falsified (some data were deleted from or added to the contents data units 107). Accordingly, at the step 703, the notification of falsification of file construction is made. The notification is made by, for example, displaying a message on the console display for the system administrator or by changing the design of image of the IM 108 to signify the falsification to the user who has access to the top page.

At the step 704, in the same way as shown in Fig. 6, the falsification-detecting-information producing/processing unit 111 calculates a hash value for each of the contents data units 500.

At the step 705, the hash value 520 embedded in the IM 108 and the hash value calculated as described above are compared. If the former value 520 is different from the latter value, the processing shifts to the step 706.

The difference, if any, between the hash value embedded in the IM 108 and the hash value calculated as described above both corresponding to a contents data unit 500 means that the file contents of the contents data unit 500 was falsified (the sentences of the contents were partially falsified). Accordingly, at the step 706, the notification of falsification of file contents is made.

In an alternative embodiment comparing the hash values corresponding to the contents may be used alone (steps 704 to 706) to determine if the contents have been falsified. And the hash values corresponding to the filenames, which include the path names, used alone (steps 701 to step 703) to determine if the filenames have been falsified. Inotherwords, step 703 is not connected to step 704.

Although the filenames with the path names of contents data units and their actual contents data are used as the base data for the detection of falsification in this embodiment, file attributes, various data attached to the contents, other linked contents, and so on'may also be used. Besides, renewal dates, etc. of files and directories may be used as information to detect falsification.

Although the hash value is calculated arid embedded in the IM 108 as falsification-detecting information in this embodiment, its object is to keep the data volume as small as possible. If the object is not of importance, the filenames with the path names of each contents data unit and its contents data may be embedded as they are in its IM without calculating its hash values. Alternatively, the hash values 510 for each contents data unit 500 may be embedded as it is in its IM, or contents data units 500 may be connected and the hash value for the series of the units may be calculated and embedded in its IM (any form will do if it retains information to specify relevant contents data).

Although the falsification-detecting information is embedded in the IM of the top page of a plurality of contents data units, an IM may be attached to each contents data unit. Alternatively, a digital signature may be made of the falsification-detecting information or the falsification-detecting information may be stored as it is, without processing it, in the magnetic disk drive 103.

The falsification-detection processing unit 112 may be started manually by the administrator of the server 100, or may automatically be started periodically, or may be stationed in the memory for full-time detection, or may be started automatically when a user has access to the contents data.

As described above, with the contents-falsification detector of this embodiment, the falsification of the construction or the contents of a plurality of contents data units can be detected. Therefore, such falsification can be detected early.

Now another embodiment of contents-falsification detector of the present invention will be described, which uses an exit gate to detect the presence or absence of the falsification-detecting information and pinpoints where falsification, if any, took place.

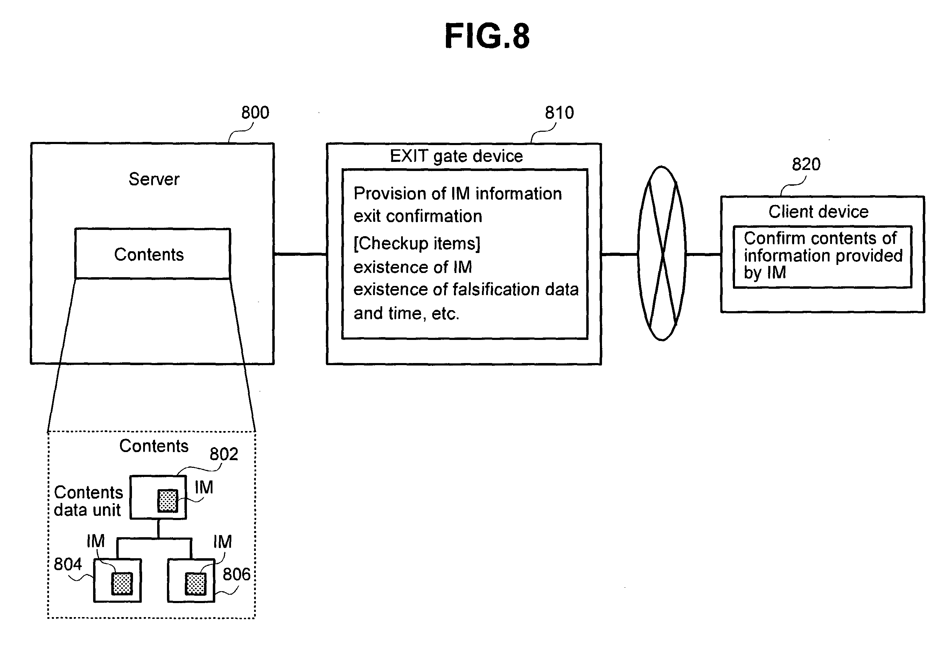

Fig. 8 shows the outline of the contents-falsification detector. As shown in the figure, the contents-falsification detecting system comprises a server 800, an exit gate device 810, and a client device 820.

The server 800 produces contents data units, attached to which are IMs wherein falsification-detecting information corresponding to their contents at the time of their registration or renewal is embedded, and transmits'them through the exit gate device 810 to the client device 820. In an embodiment the contents data units are hierarchical documents having HTML (or alternatively XML). When an HTML document is displayed by a browser, it shows a Web page. In Fig. 8 a simple example of a Web home page document 802 with hyperlinks to documents 804 and 806 is shown. In this example an IM is displayed, when the document is displayed by the browser. Each document contains an IM which may have the same or different IM. The user/client device 820 sends a request to the server 800, requesting one or more of the documents 802, 804, or 806. The selected documents are validated by the server 800 using the falsification detection information embedded in the IM(s)and if valid, sent to the Exit gate device 810. The Exit gate device 810 again validates the selected documents and if valid sends them to the client device 820. The client device again validates the selected documents and displays them using a Web browser.

The exit gate device 810 detects the falsification, if any, of the contents data units demanded by the client device 820. The client device 820 detects the falsification, if any, of the contents data units received from the exit gate device 810 and displays non-falsified contents data units.

As shown in Fig. 8, the exit gate device 810 is provided between the server 800 and the client device 820. The exit gate device 810 checks if each contents data unit has an IM and detects falsification, if any, by using their IMs. By performing checkups at the client device 820 in addition to the checkups performed at the exit gate device 810, falsification made at the server 800, on the route from the server 800 to the exit gate device 810, and on the route from the exit gate device 810 to the client device 820 is detected.

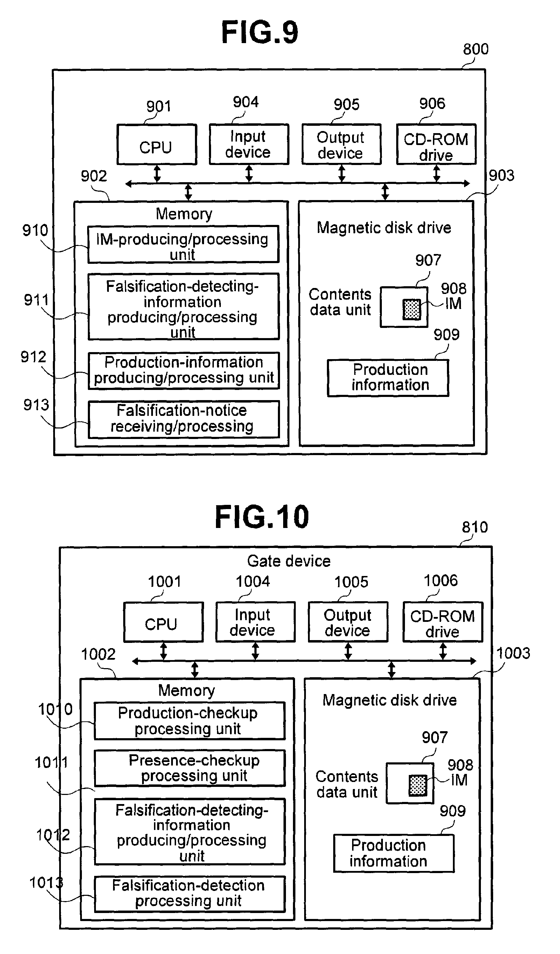

Fig. 9 shows the outline of the configuration of the server 800. As shown in the figure, the server 800 comprises a CPU 901, a memory 902, a magnetic disk drive 903, an input device 904, an output device 905, a CD-ROM drive 906, contents data units 907, IMs 908, and production information 909.

The CPU 901 controls the workings of the whole server 800. The memory 902 is loaded with various processing programs and data for controlling the workings of the whole server 800 when the whole server 800 is to be controlled. The magnetic disk drive 903 is a memory device to store the processing programs and the data.

Various data are inputted through the input device 904 to register and renew contents. Various data regarding the registration and renewal of the contents are outputted through the output device 905. The CD-ROM drive 906 reads out the contents of CD-ROMs wherein the various processing programs are stored.

The contents data units 907 are sent out to display pages in accordance with users-' demands. The IMs 908 are, for example, image data wherein falsification-detecting information corresponding to the contents data units 907 are embedded. The production information 909 is the data which indicate contents data units 907 of which the falsification-detecting information is produced.

The server 800 has an IM-producing/processing unit 910, a falsification-detecting-information producing/processing unit 911, a production-information producing/processing unit 912, and a falsification-notice receiving/processing unit 913.

The IM-producing/processing unit 910 produces IMs 908 wherein falsification-detecting information corresponding to the contents of the contents data units 907 is embedded. The falsification-detecting-information producing/processing unit 911 produces falsification-detecting information corresponding to the contents of the contents data units 907.

The production-information producing/processing unit 912 produces the production information 909 which indicates contents data units 907 of which the falsification-detecting information is produced. The falsification-notice receiving/processing unit 913 receives falsification notices from the exit gate device 810.

A program to make the server 800 function as the IM-producing/processing unit 910, the falsification-detecting-information producing/processing unit 911, the production-information producing/processing unit 912, and the falsification-notice receiving/processing unit 913 is recorded in a recording medium such as the CD-ROM and stored in a magnetic disk or the like. Then, the program is loaded into the memory and run. The program may be recorded into recording media other than the CD-ROM.

Fig. 10 shows the outline of the configuration of the exit gate device 810. As shown in the figure, the exit gate device 810 has a CPU 1001, a memory 1002, a magnetic disk drive 1003, an input device 1004, an output device 1005, and a CD-ROM drive 1006.

The CPU 1001 controls the working of the whole exit gate device 810. The memory 1002 is loaded with various processing programs and data for controlling the workings of the whole exit gate device 810 when the whole exit gate device 810 is to be controlled.

The magnetic disk drive 1003 is a memory device to store the various processing programs and the data. Various data are inputted through the input device 1004 to detect the falsification, if any, of the contents data units 907. Various data regarding the detection of the falsification, if any, of the contents data units 907 are outputted through the output device 1005. The CD-ROM drive 1006 reads out the contents of CD-ROMs wherein the various processing programs are stored.

The exit gate device 810 has a production-checkup processing unit 1010, a presence-checkup processing unit 1011, a falsification-detecting-information producing/processing unit 1012, and a falsification-detection processing unit 1013.

The production-checkup processing unit 1010 refers to the production information 909 indicating the contents data units 907 of which the falsification-detecting information is produced and checks if the falsification-detecting information of the contents data units 907 demanded by the client device 820 is made.

The presence-checkup processing unit 1011 checks if the falsification-detecting information of the contents data units 907 demanded by'the client device 820 exists. The falsification-detecting-information producing/processing unit 1012 produces falsification-detecting information corresponding to the current contents of the contents data units 907 demanded by the client device 820.

The falsification-detection processing unit 1013 compares the falsification-detecting information corresponding to the contents of the contents data units 907 at the 'time of their registration or renewal and the falsification-detecting information produced as described above. If any falsification is detected, the falsification-detection processing unit 1013 notifies the client device 820, or demander, and the server 800, or register/renewer, that falsification in the contents data units was detected at the server 800 or on the route from the server 800 to the exit gate device 810.

The program to make the exit gate device 810 function as the production-checkup processing unit 1010, the presence-checkup processing unit 1011, the falsification-detecting-information producing/processing unit 1012, and the falsification-detection processing unit 1013 is recorded in a recording medium such as the CD-ROM and stored in a magnetic disk or the like. Then, the program is loaded into the memory and run. The program may be recorded into recording media other than the CD-ROM.

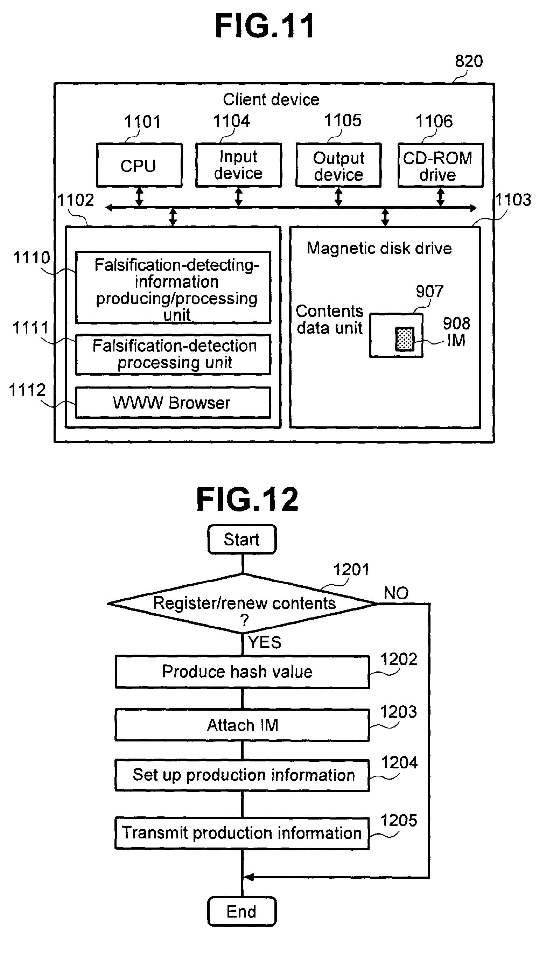

Fig. 11 shows the outline of configuration of the client device 820. As shown in the figure, the client device 820 has a CPU 1101, a memory 1102, a magnetic disk drive 1103, an input device 1104, an output device 1105, and a CD-ROM drive 1106.

The CPU 1101 controls the workings of the whole client device 820. The memory 1102 is loaded with various processing programs and data for controlling the workings of the whole client device 820 when the whole client device 820 is to be controlled. The memory 1103 includes storage for running a WWW browser 1112 for viewing selected Web pages from the server.

The magnetic disk drive 1103 is a memory device to store the processing programs and the data. Various input is made through the input device 1104 to demand and display contents data units 907. The output device 1105 displays the demanded contents data units 907. The CD-ROM drive 1106 reads out the contents of CD-ROMs wherein the various processing programs are stored.

The client device 820 has a falsification-detecting-information producing/processing unit 1110 and a falsification-detection processing unit 1111.

The falsification-detecting-information producing/processing unit 1110 receives the demanded contents data units 907 from the exit gate device 810 and produces falsification-detecting information corresponding to the current contents of the contents data units 907. The falsification-detection processing unit 1111 compares the falsification-detecting information corresponding to the contents of the contents data units 907 at the time of their registration or renewal and the falsification-detecting information corresponding to their current contents. If any falsification in the contents data units 907 is detected, the falsification-detection processing unit 1111 indicates that falsification in the contents data units 907 was detected on the route from the exit gate device 810 to the client device 820.

The program to make the client device 820 function as the falsification-detecting-information producing/processing unit 1110 and the falsification-detection processing unit 1111 is recorded in a recording medium such as the CD-ROM and stored in a magnetic disk or the like. Then, the program is loaded into the memory and run. The program may be recorded into recording media other than the CD-ROM.

Fig. 12 is a flowchart of the registration and renewal process of the contents data units 907. As shown in the figure, the server 800 produces IMs 908 wherein falsification-detecting information corresponding to the contents of registered or renewed contents data units 907 is embedded, attaches the IMs 908 to the contents data units 907, and produces production information 909 which indicates the contents data units 907 with the IMs 908.

At the step 1201, the IM-producing/processing unit 910 checks if any contents data unit 907 was registered or renewed. If any contents data unit 907 was registered or renewed, the processing advances to the step 1202.

At the step 1202, the falsification-detecting-information producing/processing unit 911 calculates the hash value of the registered or renewed contents data unit 907 and embeds it as the falsification-detecting information in an IM 908. At the step 1203, the IM 908 wherein the falsification-detecting information was embedded at the step 1202 is attached to the contents data unit 907.

At the step 1204, the production-information producing/processing unit 912 produces production information 909 which indicates the contents data unit 907 which the IM 908 was attached to at the step 1203 and sends the production information 909 to the exit gate device 810.

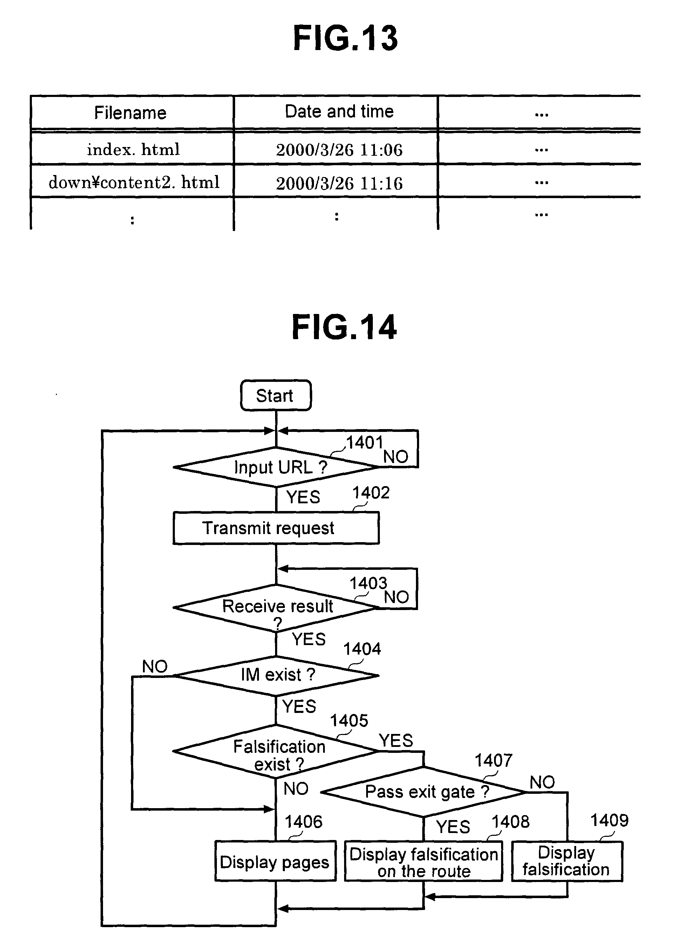

Fig. 13 shows an example of production information 909. As shown in the figure, the production information 909 is the filenames including the path names of a contents data unit 907, which an IM 908 is attached to, and the production date, time, etc. of the IM 908.

Fig. 14 is a flowchart of the processing at the client device 820. As shown in the figure, the client device 820 receives the demanded contents data units 907 from the exit gate device 810, produces falsification-detecting information corresponding to the current contents of the contents data units 907, and detects falsification, if any, in them.

At the step 1401, the WWW browser of the client device 820 checks if the user inputted a URL (Uniform Resource Locator) and advances to the step 1402 if the user inputted a URL. At the step 1402, a request for displaying the pages of the URL received at the step 1401 is transmitted to the address indicated by the URL. If the address indicated by the URL is the server 800 and the exit gate device 810 is on the route, the request is transmitted to the server 800 via the exit gate device 810.

At the step 1403, it is checked if HTML data are being received as the result of the transmitted request and the processing advances to the step 1404 if the HTML data is being received.

At the step 1404, it is checked if an IM 908 is attached to the HTML data received at the step 1403. The processing advances to the step 1405 if an IM 908 is attached or advances to the step 1406 if no IM 908 is attached.

At the step 1405, the falsification-detection processing unit 1111 has the falsification-detecting-information producing/processing unit 1110 calculate the hash value for the contents of the HTML data received at the step 1403 and compares the hash value in the IM 908 and the calculated hash value to detect the falsification, if any, in the HTML data. The processing advances to the step 1406 if no falsification is detected and to the step 1407 if any falsification is detected.

At the step 1406, pages are displayed in accordance with the HTML data received at the step 1403. If the exit gate device 810 detects any falsification in the pages at the time of processing the request for the URL, it is indicated at the client device 820 that the contents of the pages were falsified at the exit gate device 810 because HTML data indicating the falsification is being sent from the exit gate device 810 to the client device 820.

At the step 1407, it is checked if information indicating the processing made at the exit gate device 810 is included in the HTML data received at the step 1403. The processing advances to the'step 1408 if the information is included and to the step 1409 if the information is not included.

At the step 1408, it is indicated that falsification in the contents data units 907 was detected on the route from the exit gate device 810 to the client device 820. At the step 1409, it is merely indicated that falsification in the contents data units 907 was detected.

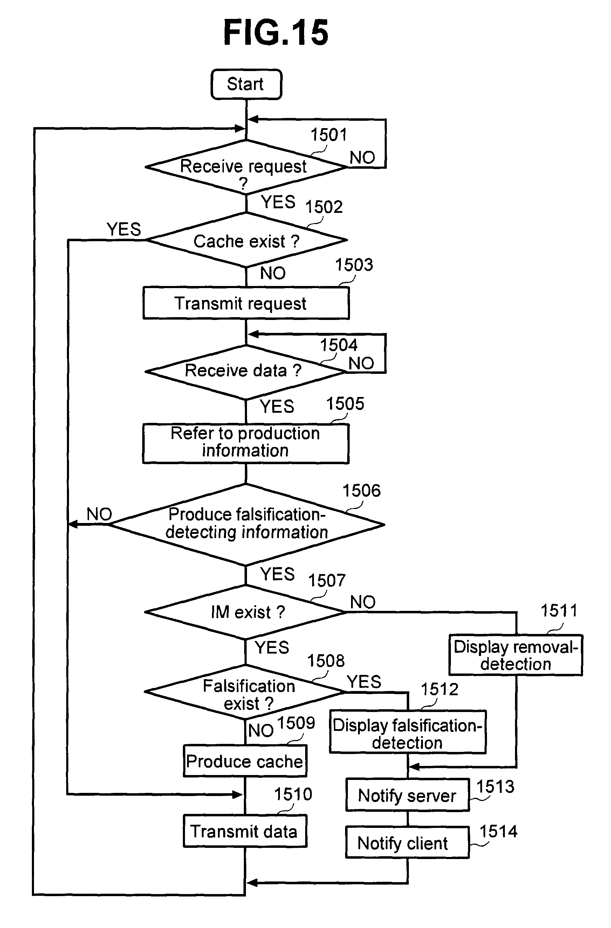

Fig. 15 shows a flowchart of the processing at the exit gate. At the step 1501, the falsification-detection processing unit 1013 of the exit gate device 810 checks if it is receiving a request from the client device 820 and advances to the step 1502 if it is receiving a request.

At the step 1502, the falsification-detection processing unit 1013 checks if it has the contents data units 907 demanded by the client request as a cache. If not, the falsification-detection processing unit 1013 sends the client request to the server 800 at the step 1503.

At the step 1504, the falsification-detection processing unit 1013 checks if it is receiving the HTML data corresponding to the request from the server 800. If receiving the HTML data, the falsification-detection processing unit 1013 advances to the step 1505.

At the step 1505, the production-checkup processing unit 1010 refers to the production information 909 which shows the contents data units 907 of which the falsification-detecting information is produced. At the step 1506, the falsification-detection processing unit 1013 checks if the falsification-detecting information of the contents data units 907 demanded by the client device 820 is already produced. If it is produced, the falsification-detection processing unit 1013 advances to the step 1507.

At the step 1507, the presence-checkup processing unit 1011 checks if the IMs 908 indicated by the production information 909 are attached to the HTML received at the step 1504 and also checks if the falsification-detecting information of the contents data units 907 demanded by the client device 820 exists. If the IMs 908 indicated by the production information 909 are attached to the contents data units 907, the falsification-detection processing unit 1013 advances to the step 1508. If not, it advances to the step 1511.

At the step 1508, the falsification-detection processing unit 1013 has the falsification-detecting-information producing/processing unit 1012 calculate the hash values for the contents of the HTML data received at the step 1504, and compares the calculated hash values and the hash values in the IMs 908 to check if the contents are falsified. If no falsification is detected, the falsification-detection processing unit 1013 advances to the step 1509. If any falsification is detected, it advances to the step 1512.

At the step 1509, the falsification-detection processing unit 1013 retains as a cache the contents data units 907, or HTML data, received at the step 1504. At the step 1510, the falsification-detection processing unit 1013 transmits, to the client device 820, the HTML data and information that the processing at the exit gate device 810 has been made.

At the step 1511, the falsification-detection processing unit 1013 indicates that it has detected the removal, if any, of the falsification-detecting information of the contents data units 907 at the server 800 or on the route from the server 800 to the exit gate device 810. At the step 1512, the falsification-detection processing unit 1013 indicates that it has detected the falsification in the contents data units 907 at the server 800 or on the route from the server 800 to the exit gate device 810.

At the step 1513, the falsification-detection processing unit 1013 informs the server 800, or register/renewer of the contents data units 907, that the falsification-detecting information of the contents data units 907 was removed or the contents of the contents data units 907 were falsified at the server 800 or on the route from the server 800 to the exit gate device 810.

Also, at the step 1513, the falsification-detection processing unit 1013 notifies the client device 820, or demander of the contents data units 907, that the falsification-detecting information of the contents data units 907 was removed or the contents of the contents data units 907 were falsified at the server 800 or on the route from the server 800 to the exit gate device 810.

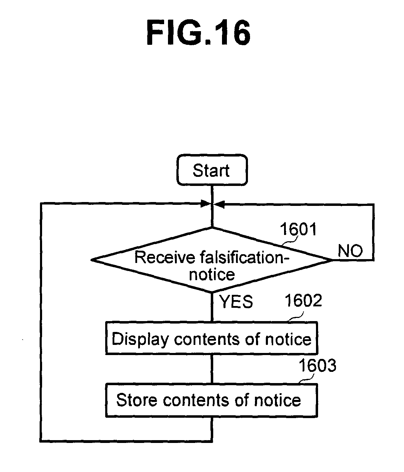

Fig. 16 is a flowchart of the processing of the falsification-notice receiving/processing unit 913 of the server 800 of the present embodiment. As shown in the figure, the falsification―notice receiving/processing unit 913 of the server 800 receives falsification notices from the exit gate device 810.

At the step 1601, the falsification-notice receiving/processing unit 913 checks if it is receiving a falsification notice from the exit gate device 810 and advances to the step 1602 if it is receiving a request. At the step 1602, the received contents of the notice are displayed to be informed to the administrator of the server 800. At the step 1603, the received contents of the notice are stored in a magnetic disk drive 903.

As described above, according to the detector for detecting the falsification of contents of the present embodiment, since it checks the existence of falsification-detecting information, it makes it possible to prevent outsiders from removing falsification-detecting information and thereby concealing falsification.

Also, according to the detector for detecting the falsification of contents of the present embodiment, since it detects the falsification of contents between a client and a server, it makes it possible to pinpoint where falsification took place.

According to the above embodiments of the present invention, since the falsification of the construction or contents of a plurality of contents data units is detected, it is possible to find any falsification of contents early.

Although the above functionality has generally been described in'terms of specific hardware and software, it would be recognized that the invention has a much broader range of applicability. For example, the software functionality can be further combined or even separated. Similarly, the hardware functionality can be further combined, or even separated. The software functionality can be implemented in terms of hardware or a combination of hardware and software. Similarly, the hardware functionality can be implemented in software or a combination of hardware and software. Any number of different combinations can occur depending upon the application.

Many modifications and variations of the present invention are possible in light of the above teachings. Therefore, it is to be understood that within the scope of the appended claims, the invention may be practiced otherwise than as specifically described.

## Claims

1. A method of detecting the falsification of contents of a plurality of files stored on a computer medium, comprising:
producing first falsification-detecting information corresponding to current filenames or current contents of the plurality of files; and
detecting the falsification of the contents of the plurality of files by comparing second falsification-detecting information corresponding to the filenames or contents of the plurality of files at the time of registration or renewal with the first falsification-detecting information.

2. The method of claim 1 wherein said first falsification-detecting information comprises a hash value.

3. A detector for detecting the falsification of contents of a plurality of files stored on a computer, comprising:
a falsification-detecting-information producing/processing unit to produce first falsification-detecting information corresponding to current filenames or current contents of the plurality of files; and
a falsification-detection processing unit to compare second falsification-detecting information corresponding to the filenames or contents of the plurality of files at the time of their registration or renewal and the first falsification-detecting information, thereby detecting any falsification in the contents.

4. The detector of claim 3 wherein said first falsification-detecting information comprises a hash value.

5. A system for detecting the falsification of contents of a plurality of files stored on a computer, comprising:
a falsification production means for producing first falsification-detecting information corresponding to current filenames or current contents of the plurality of files; and
a falsification-detection means for comparing second falsification-detecting information corresponding to the filenames or contents of the plurality of files at the time of their registration or renewal with the first falsification-detecting information, thereby detecting any falsification in the contents.

6. A method using a computer for checking the validity of a plurality of related files, comprising:
producing a first cumulative hash value at a first time comprising a plurality of first hash values, wherein a first hash value of the plurality of first hash values is associated with a related file of said plurality of related files; and
comparing said first cumulative hash value with a second cumulative hash value produced at a second time, said second cumulative hash value comprising a plurality of second hash values, wherein a second hash value of the plurality of second hash values is associated with the related file of said plurality of related files.

7. The method of claim 6 wherein said first hash value comprises hashing a contents of the related file.

8. The method of claim 6 wherein said first hash value comprises hashing a filename, comprising a path name, of the related file.

9. The method of claim 6 wherein the plurality of related files correspond to a plurality of Web pages.

10. The method of claim 6 wherein the first cumulative hash value is a concatenation of the plurality of first hash values.

11. The method of claim 6 wherein the first cumulative hash value is a hash of a concatenation of the plurality of first hash values.

12. A system for checking the validity of a plurality of related files, comprising:
a falsification producing module for producing a first cumulative hash value at a first time comprising a plurality of first hash values, wherein a first hash value of the plurality of first hash values is associated with a related file of said plurality of related files; and
a falsification detection module for comparing said first cumulative hash value with a second cumulative hash value produced at a second time, said second cumulative hash value comprising a plurality of second hash values, wherein a second hash value of the plurality of second hash values is associated with the related file of said plurality of related files.

13. A system for checking the validity of a plurality of related files, comprising:
a means for producing a first cumulative hash value at a first time comprising a plurality of first hash values, wherein a first hash value of the plurality of first hash values is associated with a related file of said plurality of related files; and
a means for comparing said first cumulative hash value with a second cumulative hash value produced at a second time, said second cumulative hash value comprising a plurality of second hash values, wherein a second hash value of the plurality of second hash values is associated with the related file of said plurality of related files.

14. A method for embedding security information in a plurality of files, wherein said plurality of files are related, said method comprising:
determining a first set comprising a first plurality of first cryptographic values, wherein a first cryptographic value of said first set is generated using first information including contents of a file of said plurality of files;
determining a hashed first set by hashing said plurality of first cryptographic values in said first set; and
generating an internet mark comprising said hashed first set, said internet mark associated with at least one file of said plurality of files.

15. The method of claim 14 wherein said plurality of files are organized hierarchically.

16. The method of claim 15 wherein at least one file of said plurality of files is an HTML file.

17. The method of claim 14 wherein said internet mark is selected from a group consisting of an image, a moving picture, or an audio file.

18. The method of claim 17 wherein said image comprises a visual mark.

19. The method of claim 14 further comprising:
determining a second set comprising a second plurality of second cryptographic values, wherein a second cryptographic value of said second set is generated using second information including a filename of said file of said plurality of files; and
wherein generating said internet mark further comprises said second set.

20. The method of claim 19 wherein said determining said second set uses a sorted list of filenames.

21. A system for embedding security information in a plurality of files, wherein said plurality of files are related, said system comprising:
a falsification-detecting producing module for producing a hashed first set by hashing a plurality of first cryptographic values in a first set, wherein a first cryptographic value of said first set is generated using first information including a contents of a file of said plurality of files; and
an Internet Mark producing module for producing an Internet Mark associated with at least one file of said plurality of files, wherein said hashed first set is embedded in said Internet Mark.

22. The system of claim 21 wherein:
said falsification-detecting producing module further determines a second set comprising a second plurality of second cryptographic values, wherein a second cryptographic value of said second set is generated using second information including a filename of said file of said plurality of files; and
said Internet Mark producing module further embeds said second set in said Internet Mark.

23. A system for embedding security information in a plurality of files, wherein said plurality of files are related, said system comprising:
means for determining a first set comprising a first plurality of first cryptographic values, wherein a first cryptographic value of said first set is generated using first information including a contents of a file of said plurality of files;
means for determining a hashed first set by hashing said plurality of first cryptographic values in said first set;
means for determining a second set comprising a second plurality of second cryptographic values, wherein a second cryptographic value of said second set is generated using second information including a filename of said file of said plurality of files; and
means for generating a digital watermark using said hashed first set, said second set and an internet mark, said internet mark associated with at least one file of said plurality of files.

24. A method for detecting tampering in at least one file of a plurality of files associated with a home page, wherein each file of said plurality of files has a corresponding filename and file contents, said method comprising:
generating a first hash value for each filename, wherein each filename includes a corresponding directory path;
forming at a current time a current filename hash value by concatenating first hash values;
generating a second hash value for each file contents; and
forming at said current time a current contents hash value by hashing a result, said result generated by concatenating second hash values.

25. The method of claim 24 further comprising:
determining tampering of any filenames of said plurality of files at said current time by comparing said current filename hash value with a previous filename hash value, said previous filename hash value generated at said previous time.

26. The method of claim 25 further comprising:
when said determining tampering of any filenames indicates no tampering of filenames, determining tampering of any contents of said plurality of files at said current time by comparing said current contents hash value with a previous contents hash value, said previous contents hash value generated at a previous time.

27. The method of claim 24 wherein said concatenating first hash values is performed after said first hash values are sorted.

28. An intermediary device for determining a location of a falsification of contents of a document, wherein said document is sent from a server to a client through said intermediary device in response to a request by said client, and wherein said document includes an Internet Mark (IM) with embedded falsification information, said intermediary device comprising:
a falsification detection module for detecting by using said IM, if said contents has been falsified; and
a notification module for notifying said server and said client of said location when said falsification detection module indicates said contents has been falsified, wherein said location includes a route between said server and said intermediary device.

29. The intermediary device of claim 28 further comprising an Internet Mark checking module for determining if said Internet Mark was removed from said document.

30. The intermediary device of claim 28, wherein said falsification information includes a hash value.

31. A client system for determining a location of a falsification of contents of a document, wherein said document is sent from a server to an exit gate to said client system responsive to a client system request, and wherein said contents includes an Internet Mark (IM) with embedded falsification information, said client system comprising:
a falsification detection module for detecting by using said IM, if said contents has been falsified; and
a display for displaying said location when said falsification detection module indicates said contents has been falsified, wherein said location includes a route between said exit gate and said client.

32. The client system of claim 31 further comprising an Internet Mark checking module for determining if said Internet Mark was removed from said document.

33. A method for determining a location of falsification of contents of a document sent from a server to a client over a communications path, said communications path comprising a first path from said server to an intermediate computer and a second path from said intermediate computer to said client, wherein said contents comprises an Internet Mark with embedded cryptographic information, said method comprising:
sending said document by said server to said intermediate computer over said first path, when said server validates said contents using said embedded cryptographic information;
determining said location comprises said first path, if said intermediate computer detects said contents has been falsified;
sending said document by said intermediate computer to said client over said second path, when said intermediate computer validates said contents using said embedded cryptographic information; and
determining said location comprises said second path, if said client detects said contents has been falsified.

34. The method of claim 33 wherein said document is a HTML document.

35. A system for determining a location of falsification of contents of a file sent over a communications path, wherein said contents comprises an Internet Mark with embedded cryptographic information, and wherein said communications path comprises a first path coupled with a second path, said system comprising:
a server for sending said file over said first path, when said server validates said contents using said embedded cryptographic information;
an intermediate computer coupled with said server using said first path, said intermediate computer for determining said location comprises said first path, if said intermediate computer detects said contents has been falsified, and for sending said file over said second path, when said intermediate computer validates said contents using said embedded cryptographic information; and
a client coupled with said intermediate computer using said second path, said client for determining said location comprises said second path, if said client detects said contents has been falsified.
